# EUROPEAN PATENT SPECIFICATION

(11) **EP 2 208 703 B1**
(45) Date of publication and mention of the grant of the patent: **21.03.2012**
(21) Application number: 10150653.3
(22) Date of filing: 13.01.2010
(51) Int. Cl.: B66F 9/075, B60K 11/06

(54) **Industrial vehicle with ventilating passage for electrical units**
Industriefahrzeug mit Luftkanal für elektrische Baueinheiten
Véhicule industriel doté d'une passage de ventilation pour les unités électriques

(30) Priority: 16.01.2009 JP 2009007789
(43) Date of publication of application: 21.07.2010
(73) Proprietor: Kabushiki Kaisha Toyota Jidoshokki, Kariya-shi, Aichi 448-8671 (JP)
(72) Inventor: Ehama, Tsuyoshi, Kariya-shi Aichi 448-8671 (JP)
(74) Representative: TBK

(56) References cited:
- EP-A1- 2 053 167
- DE-A1- 4 106 684
- GB-A- 2 387 363
- JP-A- 2009 083 973
- US-A1- 2002 189 874
- US-B1- 6 302 066

## Description

### BACKGROUND OF THE INVENTION

The present invention relates to an electric component unit mounted on an industrial vehicle such as a forklift truck.

A forklift truck is disclosed by Japanese Patent Application Publications 2005-200200 and 2001-89092 which has a counterweight mounted in the back and a battery unit in the center. The forklift truck further has between the counterweight and the battery unit various electric devices, fin-type radiators attached to the electric devices and ventilating passages. Radiators are disposed in the ventilating passages and air is flowed through the ventilating passages from one side of the vehicle body and flowed out from the other side thereof for cooling the radiators thereby to cool the electric devices.

An industrial vehicle according to the peamble of claim 1 is disclosed in GB 23 87 363A.

In recent years, the demand for downsizing the industrial vehicle has been increasing. However, if the industrial vehicle is made smaller, the electric devices that produce heat will have to be disposed close to each other, so that they cannot be sufficiently cooled. The present invention is directed to providing an electric component unit that is used for an industrial vehicle and cools electric devices efficiently.

### SUMMARY OF THE INVENTION

An industrial vehicle has a vehicle body and an electric component unit. The electric component unit has a base member fixed to the vehicle body, a fan fixed to the base member for ventilating, at least one electric device fixed to the base member and at least one radiator fixed to the electric device. The base member has an opening provided in the center of the base member and a plurality of ducts. The ducts and the electric device cooperate to form a ventilating passage. The ventilating passage has a plurality of separate passages communicated with the opening and at least part of the radiator is disposed in each of the separate passages.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiment together with the accompanying drawings in which:
FIG. 1 is a left side view of a forklift truck according to a preferred embodiment of the present invention;
FIG. 2 is a fragmentary partially enlarged perspective view showing the forklift truck of FIG 1, wherein a hood thereof is opened;
FIG. 3 is a perspective view showing a part of the forklift truck of FIG. 1 and an electric component unit;
FIG. 4 is a perspective view showing the electric component unit of FIG 3;
FIG. 5 is an exploded perspective view showing the electric component unit of FIG. 4;
FIG. 6 is another perspective view showing the electric component unit of FIG. 4; and
FIG. 7 is a rear view showing the electric component unit of FIG. 4.

### DETAILED DESCRIPTION OF THE PREFERRED EMBODIMENT

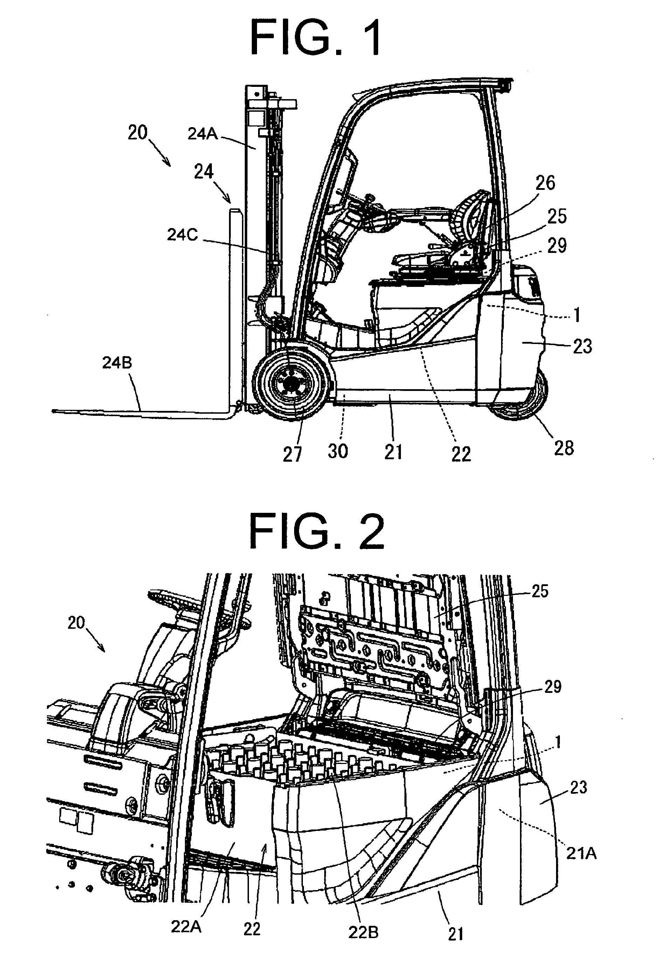

The following will describe a preferred embodiment according to the present invention with reference to FIGS. 1 through 7. FIG. 1 shows a forklift truck 20 (industrial vehicle) which has a vehicle body 21, a loading implement 24 mounted in the front of the vehicle body 21, a battery unit 22 installed in the center thereof and a counterweight 23 in the rear thereof. The forklift truck 20 further has a pair of front wheels 27 supplied with power by a pair of driving motors 30 in the lower front of the vehicle body 21 and a pair of steerable rear wheels 28 in the lower rear thereof. The loading implement 24 provided in the front of the vehicle body 21 has a mast 24A, a pair of forks 24B movable up and down along the mast 24A and an elevating device 24C raising and lowering the pair of forks 24B.

The battery unit 22 has a case 22A and a plurality of battery cells 22B provided in the case 22A, as shown in FIG 2. The battery unit 22 is covered with a hood 25 that is pivotably installed to the upper rear of the battery unit 22. The hood 25 placed in its closed position covers the top of the battery unit 22, as shown in FIG. 1. With the hood 25 opened, the top of the battery unit 22 is accessible (refer to FIG. 2). A seat 26 for operator is installed on the top of the hood 25. A compartment 21A is formed between the battery unit 22 and the counterweight 23 for accommodating therein the electric component unit 1. The top of the compartment 21A is covered with a cover 29 and the front thereof is covered with the battery unit 22.

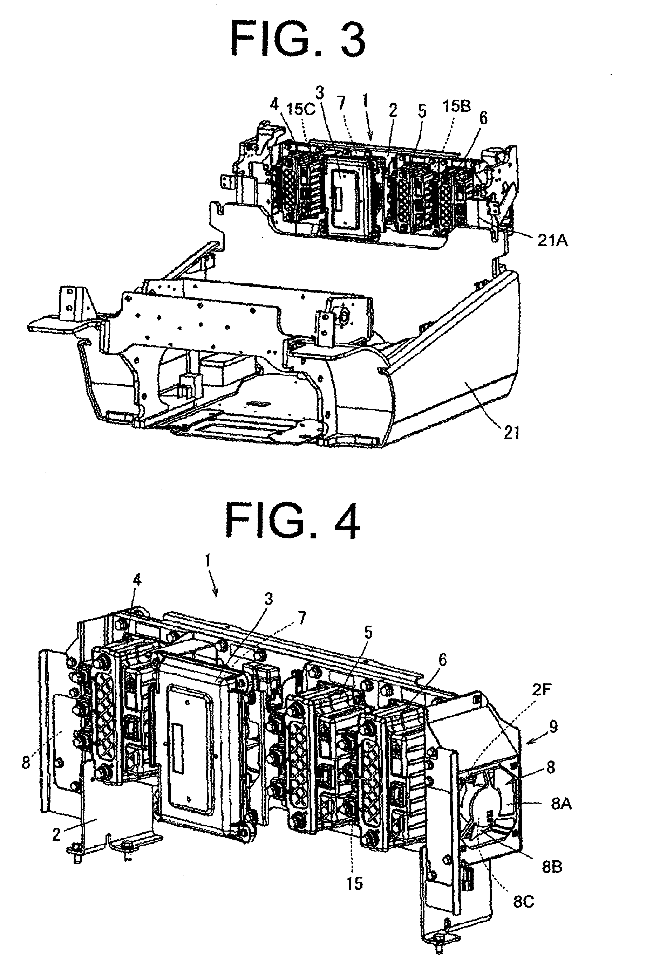

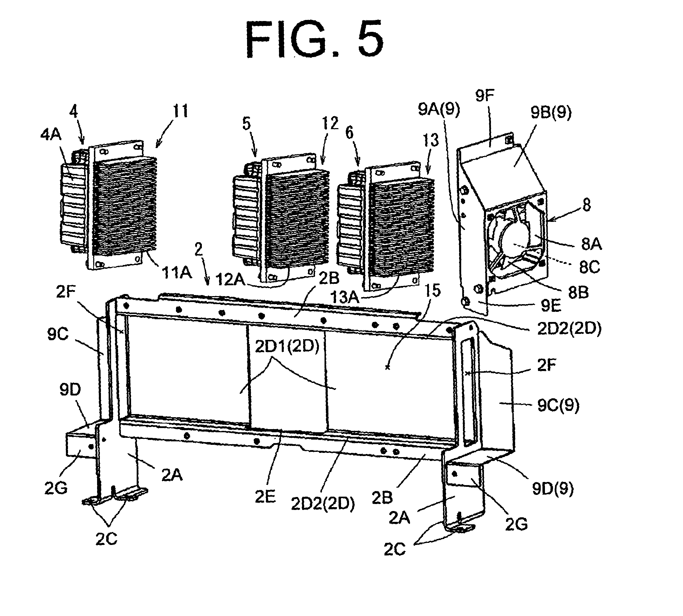

The electric component unit 1 includes a base member 2, a plurality of electric devices 3 through 7 fixed to the base member 2 and a pair of fans 8, as shown in FIGS. 3 and 4. The base member 2 has a pair of side portions 2A connected by a pair of upper and lower supporting portions 2B at opposite ends thereof, as shown in FIG. 5. Each side portion 2A has at the lower end thereof a pair of brackets 2C extending horizontally in opposite directions and fixed to the vehicle body 21 by bolts and the like (refer to FIGS. 3 and 4).

As shown in FIG. 5, a duct 2D is formed between the pair of supporting portions 2B, and the duct 2D and the electric devices 3 through 7 cooperate to form a ventilating passage 15. The duct 2D is hat-shaped and has a pair of mounting faces 2D2 extending perpendicular to each supporting portion 2B and a pair of right and left duct covers 2D1 that are spaced apart each other and extend between the pair of mounting faces 2D2. The pair of duct covers 2D1 form therebetween an opening 2E so that the ventilating passage 15 is opened at the opening 2E. Air entering into the duct 2D through the opening 2E (suction window) flows in horizontal direction along each duct cover 2D1 and then out through exhaust openings 2F formed in the side portions 2A.

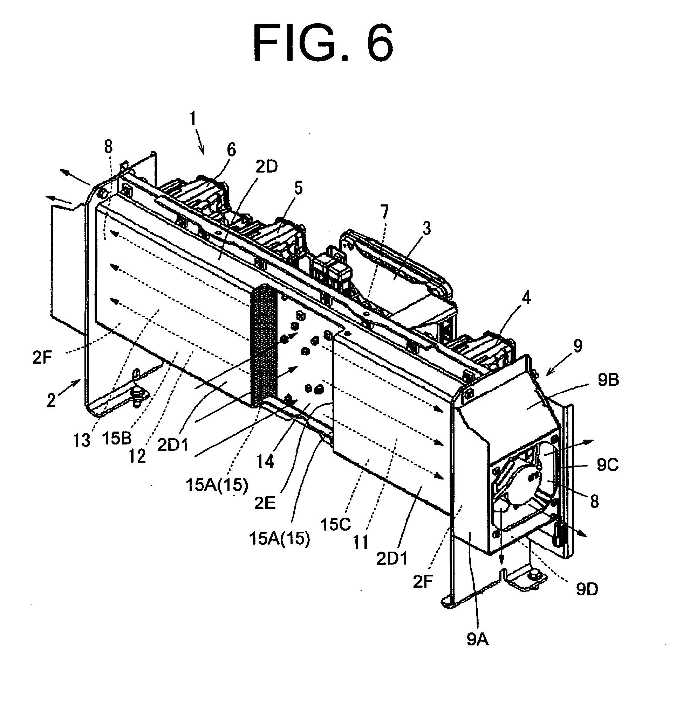

Each fan 8 is provided outside the exhaust opening 2F and housed in a case 9, as shown in FIGS. 5 and 6. The fan 8 has a fan base 8A, fan blades 8B rotatably supported by the fan base 8A and a motor 8C rotating the fan blades 8B. The fan base 8A is integrally formed with a front part 9A and an upper part 9B of the case 9. The side portion 2A of the base member 2 is integrally formed with a rear part 9C and a lower part 9D of the case 9.

The fan 8 has a lower mounting 9E extending downward from the front part 9A of the case 9 and an upper mounting 9F extending upward from the upper part 9B of the case 9 for fixing the fan 8 to the base member 2. The base member 2 has a mounting 2G extending downward from the front end of the lower part 9D. The lower mounting 9E of the case 9 is fixed to the mounting 2G and the upper mounting 9F is fixed to the upper portion of the side portion 2A of the base member 2.

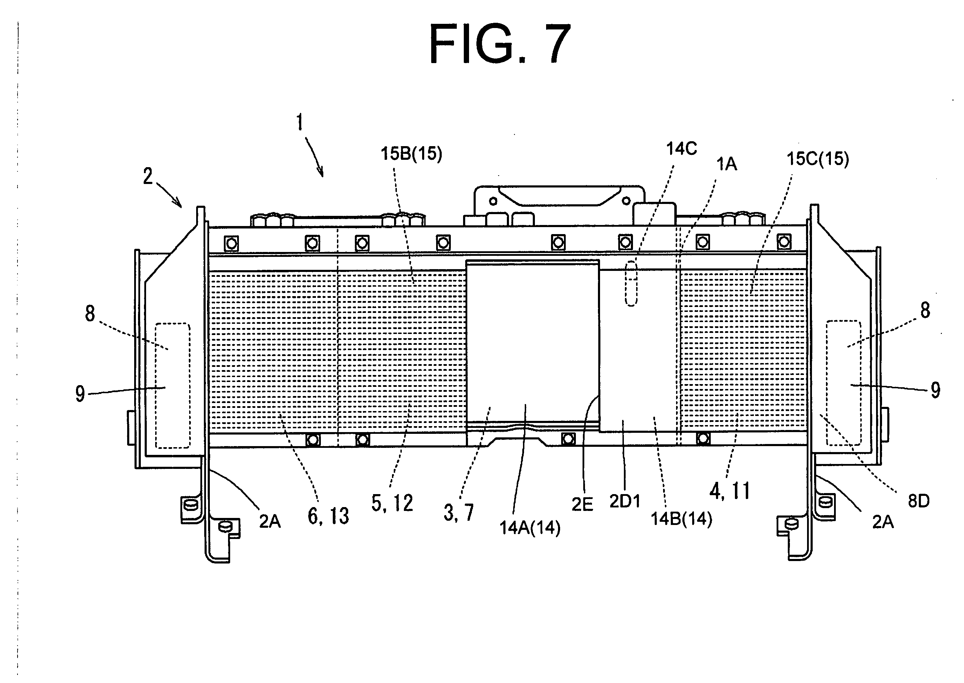

The case 9 surrounds the fan 8 on the left, right, top and bottom thereof, as shown in FIGS. 4 and 5, for improving the suction efficiency of the fan 8. The upper part 9B of the case 9 extends from the upper portion of the exhaust opening 2F obliquely downward or toward the fan 8 so that air flow from the upper portion of the exhaust opening 2F to the fan 8 is promoted. About half of the suction side of the fan 8 faces the exhaust opening 2F and the remaining thereof is covered with the inverter 6 that is fixed to the base member 2. Therefore, air tends to flow from the exhaust opening 2F to the fan 8. A space 8D is formed between the fan 8 and the side portion 2A of the base member 2, as shown in FIG. 7. Thus, the fan 8 can draw air through the whole area of the exhaust opening 2F.

The electric component unit 1 includes a main controller 3, inverters 4 through 6 and a switching device 7 as electric devices, as shown in FIG. 4. The main controller 3 is electrically connected to various equipment of the forklift truck 20 (e.g., loading implement 24, driving motors 30, steering device) for controlling such equipment. The inverters 4 and 5 are provided in electric lines connecting the battery unit 22 and the right and left driving motors 30, respectively, and the inverter 6 is provided in an electric line connecting the battery unit 22 and the loading implement 24. The inverters 4 through 6 supply electric power to the driving motors 30 and the like after converting the power from DC to AC.

The switching device (i.e. conductor) 7 is provided in an electric line connecting the battery unit 22 and the main controller 3 and operable to turn on and off the electric power to the main controller 3 (refer to FIGS. 1 and 4). The inverters 4 through 6 and the switching device 7 which produce much heat are provided with fin-type radiators 11 through 13 and with a plate-shaped electric power supply panel 14, respectively, as shown in FIGS. 5 and 6. The radiators 11, 12, 13 have fin plates 11A, 12A, 13A, respectively, and air flows between the fin plates.

The inverters 4 through 6 are fixed to the upper and lower supporting portions 2B of the base member 2 so as to cover the region between the upper and lower supporting portions 2B, as shown in FIGS. 4 through 6. Thus, the inverters 4 through 6 and the duct 2D of the base member 2 cooperate to form the ventilating passage 15. The radiators 11 through 13 are disposed in the ventilating passage 15 between the inverters 4 through 6 and the duct 2D so that the fin plates 11A through 13A extend from the opening 2E toward the exhaust opening 2F. The main controller 3 and the switching device 7 are fixed to the upper and lower supporting portions 2B of the base member 2 so as to cover the region between the upper and lower supporting portions 2B. The electric power supply panel 14 is disposed so as to face the opening 2E.

The electric power supply panel 14 is larger than the opening 2E, as shown in FIGS. 6 and 7, and has a face portion 14A facing the opening 2E and an overlap portion14B adjacent to the face portion 14A. The face portion 14A faces substantially the entirety of the opening 2E and is away from the opening 2E with a distance that is almost the same as the height of the fin plates 11A through 13A. Thus, the electric power supply panel 14 cooperates with the opening 2E to form at the opposite sides of the opening 2E inlet ports 15A forming a part of the ventilating passage 15. In the embodiment, the overlap portion 14B is integrally formed with the face portion 14A. The overlap portion 14B extends for a distance of about 70 to 100 mm in horizontal direction from the face portion 14A and faces the duct cover 2D1.

The inverters 5 and 6 are provided on one side of the opening 2E (right side of the vehicle body) and the inverter 4 is provided on the other side (left side of the vehicle body), as shown in FIGS. 6 and 7. The inverters 5 and 6 and the main controller 3 are fixed to the base member 2 so that no space is formed between any two parts. For this purpose, these three parts 5, 6 and 3 are fixed to the base member 2 with the inverter 6 pressed against the right side portion 2A, the inverter 5 against the inverter 6 and the main controller 3 against the inverter 5, as most clearly seen in FIG. 7. Similarly, the inverter 4 is pressed against the other side portion 2A of the base member 2 and fixed to the base member 2. By so arranging, a clearance 1A of about 1 to 3 mm is formed between the radiator 11 and the electric power supply panel 14.

The clearance 1A is located at a predetermined distance in lateral direction away from the opening 2E, as shown in FIG. 7, and covered with the duct cover 2D1. The overlap portion 14B of the electric power supply panel 14 has formed therethrough a hole 14C at a position that is laterally away from the opening 2E. Therefore, air can be drawn from the switching device 7 to the ventilating passage 15 through the hole 14C and the clearance 1A. Thus, the switching device 7 can be cooled more efficiently. Water entering from the opening 2E impinges on the face portion 14A of the electric power supply 14, so that water is prevented from entering into the switching device 7 directly through the hole 14C and the clearance 1A.

As shown in FIG. 6, the ventilating passage 15 is formed between the base member 2 and the electric devices 3 through 7. The ventilating passage 15 has the opening 2E, the pair of inlet ports 15A located on opposite sides of the opening 2E, a pair of separate passages 15B, 15C communicating with the respective inlet ports 15A and a pair of exhaust openings 2F. The radiators 12, 13 are disposed in the separate passage 15B and the radiator 11 is disposed in the separate passage 15C.

As shown in FIG. 6, the fan 8 is provided at a position outward of the end of each separate passage 15B, 15C. In operation of the fan 8, air is drawn from the opening 2E, then flows toward the fans 8 through the inlet ports 15A, the separate passages 15B, 15C and the exhaust openings 2F and finally flows out of the ventilating passage 15. Thus, the air flowed in from the opening 2E firstly impinges on the electric power supply panel 14 thereby to cool the panel 14. Subsequently, the air is divided into the separate passages 15B, 15C and cools the fins of the radiators 11 through 13.

The electric component unit 1 is installed in a compartment 21A of the vehicle body 21, as shown in FIGS. 2 and 3. Specifically, the electric unit 1 is set in the compartment 21A in such a position that the electric devices 3 through 7 face the battery unit 22 and the opening 2E of the base member 2 faces the counterweight 23. The separate passages 15B and 15C extend from the center of the vehicle body 21 toward the lateral sides of the vehicle body 21, where the exhaust opening 2F and the fan 8 are provided. Therefore, the air drawn from the center of the vehicle body 21 flows toward the sides thereof and finally flows out downward.

The fan 8 is a consumable part. When replacing the fan 8 with a new one, firstly the hood 25 is opened, as shown in FIG. 2. The cover 29 is removed from the vehicle body 21 and then the fan 8 is removed from the base member 2 together with the front part 9A and the upper part 9B of the case 9, as shown in FIG. 5. The fan 8 may be removed for replacement by moving it upward and frontward relative to the base member 2 thereby.

As shown in FIG. 6, the electric component unit 1 has the base member 2, the electric devices 3 through 7 and the fans 8. The base member 2 has the duct 2D and in the center thereof the opening 2E. The duct 2D cooperates with the electric devices 4 through 6 to form therebetween the ventilating passage 15. Air flow is developed through the ventilating passage 15 by the operation of the fan 8. The ventilating passage 15 has the separate passages 15B, 15C communicating with the opening 2E and the radiators 11 through 13 that are attached to the electric devices 4 through 6 are disposed in the separate passages 15B, 15C.

Air flowing through the separate passages 15B, 15C cools the radiators 11 through 13 disposed in the separate passages 15B, 15C. Thus, the radiators 11 through 13 can be cooled more effectively than radiators in the conventional structure which are cooled by air flowing only through one passage. Moreover, the electric devices 3 through 7 and the fans 8 which are fixed to the base member into a unit assembly can be easily installed in the vehicle body 21 (refer to FIG. 3). Furthermore, the ventilating passage 15 which is formed in the electric component unit 1 by the base member 2 and the electric devices 4 through 6 can be formed easily at a low cost.

The electric component unit 1 has the electric power supply panel 14 fixed to the switching device 7 and the radiators 11 through 13 provided for the inverters 4 through 6. The electric power supply panel 14 faces and covers the opening 2E of the base member 2, forming the inlet ports 15A, where each of the separate passages 15B, 15C opens. The radiators 11 through 13 are disposed in the respective separate passages 15B, 15C extending from the inlet ports 15A. Therefore, air flowing in from the opening 2E cools the electric power supply panel 14 and the switching device 7. Furthermore, air cools the radiators 11 through 13 in the separate passages 15B, 15C thereby to cool each of the inverters 4 through 6. Thus, the electric devices can be cooled more efficiently than the radiators in the conventional structure which are cooled by air flowing only through one passage.

As shown in FIG. 7, the electric power supply panel 14 has the face portion 14A covering substantially the entire area of the opening 2E of the base member 2 and the overlap portion 14B forming a part of the separate passage 15C. The electric power supply panel 14 prevents water flowing through the opening 2E from entering directly into the switching device 7 by the face portion 14A and the overlap 14B.

As shown in FIGS. 5 and 6, the electric component unit 1 has the case 9 surrounding each fan 8. A part of the case 9 is formed integrally with the base member 2 and the rest of the case 9 is formed integrally with the fan base 8A of the fan 8. The fan 8 thus surrounded by the case 9 can draw and blow out air efficiently. Furthermore, the fan 8 can be removed together with some part of the case 9 from the base member 2, so that replacement of the fan 8 can be accomplished easily.

The electric component unit 1 has a plurality of inverters 4 through 6 as shown in FIG. 6. The inverters 4 through 6 are provided in the electric lines connecting between the battery unit 22 and the driving motor 30 and between the battery unit 22 and the loading implement 24 (refer to FIG. 1). The radiators 11 through 13 are provided for the inverters 4 through 6, respectively, and at least one radiator is disposed in each of the separate passages 15B, 15C. Therefore, the inverters 4 through 6 producing much heat in the forklift truck can be cooled efficiently by the radiators 11 through 13 disposed in the separate passages 15B, 15C.

As shown in FIG. 2, the forklift truck 20 has the counterweight 23, the battery unit 22, the electric component unit 1 disposed between the counterweight 23 and the battery unit 22 and the cover 29 covering the top of the electric component unit 1. The electric component unit 1 is fixed to the vehicle body 21 so that the opening 2E of the base member 2 may face the counterweight 23, as shown in FIGS. 3 and 6. A pair of the separate passages 15B, 15C extend from the opening 2E toward the opposite lateral sides of the vehicle body 21 and the fans 8 are provided at positions outward of the respective separate passages 15B, 15C.

The electric component unit 1 is covered at the front thereof with the battery unit 22 and at the top thereof with the cover 29, respectively. Therefore, there is very little fear that the electric component unit 1 is subjected to water splash from the front and the top during washing of the forklift truck 20. The opening 2E is covered with the electric power supply panel 14 that is larger than the opening 2E (refer to FIG 7). Therefore, the electric power supply panel 14 can effectively prevent water splash from entering into the battery compartment.

The present invention is not limited to the above embodiment and may be applied to the following embodiments.
(1) The electric component unit 1 according to the above embodiment has a plurality of electric devices 3 through 7 and radiators 11 through 13. In an alternative embodiment, one electric device may have a plurality of radiators and at least part of one of the radiators may be disposed in each of the separate passages.
(2) The electric component unit 1 according to the above embodiment has a plurality of fin-type radiators 11 through 13. In an alternative embodiment, the electric component unit may have only one radiator and at least part of the radiator may be disposed in each of the separate passages.
(3) The electric component unit 1 according to the above embodiment has a plurality of separate passages 15B, 15C and a plurality of fans 8. In an alternative embodiment, only one fan is disposed at the opening to draw air therethrough and to blow the air to a plurality of separate passages.
(4) Though the electric component unit 1 according to the above embodiment has a pair of separate passages 15B, 15C, more than two separate passages may be provided in an alternative embodiment.
(5) According to the above embodiment, the front part 9A and the upper part 9B of the case 9 are integrally formed with the fan 8 and the rear part 9C and the lower part 9D are integrally formed with the base member 2. In an alternative embodiment, any part of the case may be integrally formed with the fan and the rest may be integrally formed with the base member.
(6) The electric component unit 1 according to the above embodiment has a plurality of inverters, i.e., 4 and 5 for the driving motor 30 and 6 for the loading implement 24. In an alternative embodiment, the electric component unit may have one inverter for the driving motor and a plurality of inverters for the loading implement.
(7) In the electric component unit 1 according to the above embodiment, air is drawn from the opening 2E and flows out through each of the separate passages 15B, 15C. In an alternative embodiment, it may be so arranged that air may be drawn from the ends of a plurality of separate passages and flow out through one opening.

An industrial vehicle has a vehicle body and an electric component unit. The electric component unit has a base member fixed to the vehicle body, a fan fixed to the base member for ventilating, at least one electric device fixed to the base member and at least one radiator fixed to the electric device. The base member has an opening provided in the center of the base member and a plurality of ducts. The ducts and the electric device cooperate to form a ventilating passage. The ventilating passage has a plurality of separate passages communicated with the opening and at least part of the radiator is disposed in each of the separate passages.

## Claims

1. An industrial vehicle (20) comprising:
a vehicle body (21); and
an electric component unit (1), the electric component unit having:
a base member (2) fixed to the vehicle body;
a fan (8) fixed to the base member for ventilating;
at least one electric device (3, 4, 5, 6, 7) fixed to the base member;
and
at least one radiator (11 ,12, 13) fixed to the electric device,
the base member has an opening (2E) provided in the center of the base member and a plurality of ducts (2D), **characterized in that** the ducts and the electric device cooperate to form a ventilating passage (15), wherein the ventilating passage has a plurality of separate passages (15B, 15C) communicated with the opening, and at least part of the radiator is disposed in each of the separate passages.

2. The industrial vehicle according to claim 1, wherein the electric component unit has a plurality of electric devices, wherein the electric component unit having:
a switching device (7) forming the electric device;
an electric power supply panel (14) provided to the switching device; and
a plurality of inverters (4, 5, 6) forming the other electric devices, wherein the inverter is provided with the radiator,
**characterized in that** the electric power supply panel faces the opening, wherein the electric power supply panel and the opening cooperate to form therebetween a plurality of inlet ports (15A) and the separate passages communicated with the inlet ports, respectively.

3. The industrial vehicle according to any one of claims 1 and 2, **characterized in that** the electric component unit further has:
a pair of side portions (2A) provided at opposite ends of the base member; and
an exhaust opening (2F) formed in each of the side portions,
wherein a plurality of fans are fixed to the base member and each of the fans faces the exhaust opening.

4. The industrial vehicle according to claim 2, **characterized in that** the electric power supply panel further has:
a face portion (14A) facing substantially the entirety of the opening; and
an overlap portion (14B) integrally formed with the face portion and forming a part of the separate passage.

5. The industrial vehicle according to claim 4, **characterized in that** the duct has:
a pair of mounting faces (2D2), wherein the base member has a pair of supporting portions (2B), the pair of mounting faces extending perpendicular to each supporting member; and
a pair of duct covers (2D1) which are spaced apart each other and extend between the pair of mounting faces,
wherein the pair of duct covers form therebetween the opening, wherein the overlap portion faces the duct cover.

6. The industrial vehicle according to claim 5, **characterized in that** the electric component unit further has:
a clearance (1A) formed between the electric power supply panel and the radiator; and
a hole (14C) formed in the overlap portion,
wherein air is passed through the clearance and the hole, wherein the clearance and the hole face the duct cover.

7. The industrial vehicle according to any one of claims 1 through 6, **characterized in that** wherein the electric component unit further has a case (9) surrounding the fan, the fan has a fan base (8A), a part of the case being integrally formed with the base member and the rest of the case being integrally formed with the fan base.

8. The industrial vehicle according to any one of claims 1 through 7, further comprising:
a battery unit (22);
a driving motor (30); and
a loading implement (24);
wherein the inverters are provided in electric lines between the battery unit and the driving motor or between the battery unit and the loading implement, **characterized in that** at least one radiator is disposed in each of the separate passages.

9. The industrial vehicle according to any one of claims 1 through 8, further comprising:
a counterweight (23) provided in the rear of the vehicle body;
a battery unit provided in the center of the vehicle body; and
a cover (29) covering the electric component unit,
**characterized in that** the electric component unit is disposed between the counterweight and the battery unit,
wherein the opening faces the counterweight,
wherein a pair of the separate passages extend toward opposite lateral sides of the vehicle body, each fan being provided at a position outward of the end of the separate passage.

## Patentansprüche

1. Industriefahrzeug (20), mit:
einer Karosserie (21); und
einer elektrischen Bauelementeeinheit (1), wobei die elektrische Bauelementeeinheit Folgendes hat:
ein an der Karosserie befestigtes Basiselement (2);
ein zum Belüften an dem Basiselement angebrachtes Gebläse (8);
mindestens eine an dem Basiselement befestigte elektrische Vorrichtung (3, 4, 5, 6, 7) ;
und
mindestens einen an der elektrischen Vorrichtung befestigten Radiator (11, 12, 13),
wobei das Basiselement eine in der Mitte des Basiselements vorgesehene Öffnung (2E) und eine Vielzahl Leitungen (2D) hat, **dadurch gekennzeichnet, dass** die Leitungen und die elektrische Vorrichtung zusammenwirken, um einen Belüftungsdurchgang (15) zu bilden, wobei der Belüftungsdurchgang eine Vielzahl separater Durchgänge (15B, 15C) hat, die mit der Öffnung verbunden sind, und mindestens ein Teil des Radiators in jedem der separaten Durchgänge untergebracht ist.

2. Industriefahrzeug nach Anspruch 1, wobei die elektrische Bauelementeeinheit eine Vielzahl elektrischer Vorrichtungen hat, wobei die elektrische Bauelementeeinheit Folgendes hat:
eine die elektrische Vorrichtung bildende Schaltvorrichtung (7);
eine an der Schaltvorrichtung vorgesehene elektrische Stromversorgungs-Konsole (14);
und
eine Vielzahl die anderen elektrischen Vorrichtungen bildende Wechselrichter (4, 5, 6), wobei der Wechselrichter mit dem Radiator versehen ist,
**dadurch gekennzeichnet, dass** das elektrische Stromversorgungs-Paneel der Öffnung zugewandt ist, wobei das elektrische Stromversorgungs-Paneel und die Öffnung zusammenwirken, um dazwischen eine Vielzahl Einlasskanäle (15A) und die mit den Einlasskanälen verbundenen jeweiligen separaten Durchgänge zu bilden.

3. Industriefahrzeug nach einem der Ansprüche 1 oder 2, **dadurch gekennzeichnet, dass** die elektrische Bauelementeeinheit ferner Folgendes hat:
ein an gegenüberliegenden Enden des Basiselements vorgesehenes Paar Seitenabschnitte (2A); und
eine in jedem der Seitenabschnitte gebildete Auslassöffnung (2F),
wobei eine Vielzahl Gebläse an dem Basiselement befestigt ist und jedes der Gebläse der Auslassöffnung zugewandt ist.

4. Industriefahrzeug nach Anspruch 2, **dadurch gekennzeichnet, dass** das elektronische Stromversorgungs-Paneel ferner hat:
einen im Wesentlichen der ganzen Öffnung zugewandten Flächenabschnitt (14A);
und
einen einstückig mit dem Flächenabschnitt gebildeten Überlappungsabschnitt (14B), der und einen Teil des separaten Durchgangs bildet, hat.

5. Industriefahrzeug nach Anspruch 4, **dadurch gekennzeichnet, dass** die Leitung Folgendes hat:
ein Paar Montageflächen (2D2), wobei das Basiselement ein Paar Stützabschnitte (2B) hat, wobei das Paar Montageflächen sich rechtwinklig zu jedem Stützelement erstreckt; und
ein Paar Leitungsabdeckungen (2D1), die voneinander beabstandet sind und sich zwischen dem Paar Montageflächen erstrecken,
wobei das Paar Leitungsabdeckungen dazwischen die Öffnung bildet, wobei der Überlappungsabschnitt der Leitungsabdeckung zugewandt ist.

6. Industriefahrzeug nach Anspruch 5, **dadurch gekennzeichnet, dass** die elektrische Bauelementeeinheit ferner Folgendes hat:
einen zwischen dem elektrischen Stromversorgungs-Paneel und dem Radiator gebildeten Zwischenraum (1A); und
ein in dem Überlappungsabschnitt ausgebildetes Loch (14C),
wobei Luft durch den Zwischenraum und das Loch geführt wird, wobei der Zwischenraum und das Loch der Leitungsabdeckung zugewandt sind.

7. Industriefahrzeug nach einem der Ansprüche 1 bis 6, **dadurch gekennzeichnet, dass** die elektrische Bauelementeeinheit ferner ein das Gebläse umgebendes Gehäuse (9) hat und das Gebläse eine Gebläsebasis (8A) hat, wobei ein Teil des Gehäuses einstückig mit dem Basiselement gebildet ist und der Rest des Gehäuses einstückig mit der Gebläsebasis gebildet ist.

8. Industriefahrzeug nach einem der Ansprüche 1 bis 7, ferner mit:
einer Batterieeinheit (22);
einem Antriebsmotor (30); und
einem Ladegerät (24);
wobei die Wechselrichter in elektrischen Leitungen zwischen der Batterieeinheit und dem Antriebsmotor oder zwischen der Batterieeinheit und dem Ladegerät vorgesehen sind, **dadurch gekennzeichnet, dass** mindestens ein Radiator in jedem der separaten Durchgänge eingerichtet ist.

9. Industriefahrzeug nach einem der Ansprüche 1 bis 8, ferner mit:
einem im Heck der Fahrzeugkarosserie vorgesehenen Gegengewicht (23);
einer in der Mitte der Fahrzeugkarosserie vorgesehenen Batterieeinheit; und
einer die elektrische Bauelementeeinheit abdeckenden Abdeckung (29),
**dadurch gekennzeichnet, dass** die elektrische Bauelementeeinheit zwischen dem Gegengewicht und der Batterieeinheit angeordnet ist,
wobei die Öffnung dem Gegengewicht zugewandt ist,
wobei sich ein Paar separater Durchgänge in Richtung gegenüberliegender seitlicher Karosserieflächen erstrecken, wobei jedes Gebläse an einer Stelle außerhalb des Endes des separaten Durchgangs vorgesehen ist.

## Revendications

1. Véhicule industriel (20) comprenant :
une carrosserie (21) du véhicule ; et
une unité (1) de composants électriques, l'unité de composants électriques ayant :
un élément de base (2) fixé à la carrosserie du véhicule ;
un ventilateur (8) permettant de ventiler fixé à l'élément de base ;
au moins un dispositif électrique (3, 4, 5, 6, 7) fixé à l'élément de base ;
et
au moins un radiateur (11, 12, 13) fixé au dispositif électrique,
l'élément de base a une ouverture (2E) prévue au milieu de l'élément de base et une pluralité de conduits (2D), **caractérisé en ce que** les conduits et le dispositif électrique coopèrent pour former un passage de ventilation (15), où le passage de ventilation a une pluralité de passages distincts (15B, 15C) qui sont en communication avec l'ouverture, et au moins une partie du radiateur est disposée dans chacun des passages distincts.

2. Véhicule industriel selon la revendication 1, dans lequel l'unité de composants électriques a une pluralité de dispositifs électriques, où l'unité de composants électriques ayant :
un dispositif de commutation (7) formant le dispositif électrique ;
un panneau d'alimentation électrique (14) fourni au dispositif de commutation ; et
une pluralité d'onduleurs (4, 5, 6) formant les autres dispositifs électriques, où l'onduleur est doté d'un radiateur,
**caractérisé en ce que** le panneau d'alimentation électrique fait face à l'ouverture, où le panneau d'alimentation électrique et l'ouverture coopèrent pour former entre eux une pluralité d'orifices d'entrée (15A) et les passages distincts sont en communication avec les orifices d'entrée, respectivement.

3. Véhicule industriel selon l'une quelconque des revendications 1 et 2, **caractérisé en ce que** l'unité de composants électriques a en outre :
une paire de parties latérales (2A) prévues au niveau des extrémités opposées de l'élément de base ; et
une ouverture d'échappement (2F) formée dans chacune des parties latérales,
dans lequel une pluralité de ventilateurs sont fixés à l'élément de base et chacun des ventilateurs fait face à l'ouverture d'échappement.

4. Véhicule industriel selon la revendication 2, **caractérisé en ce que** le panneau d'alimentation électrique a en outre :
une partie de face (14A) faisant essentiellement face à toute l'ouverture ; et
une partie de chevauchement (14B) formée en un seul bloc avec la partie de face et formant une partie du passage distinct.

5. Véhicule industriel selon la revendication 4, **caractérisé en ce que** le conduit a :
une paire de faces de montage (2D2), où l'élément de base a une paire de parties de support (2B), la paire de faces de montage s'étendant perpendiculairement à chaque élément de support ;
une paire de couvercles de conduit (2D1) qui sont écartés l'un de l'autre et s'étendent entre la paire de faces de montage,
dans lequel la paire de couvercles de conduit forment entre eux l'ouverture, où la partie de chevauchement fait face au couvercle du conduit.

6. Véhicule industriel selon la revendication 5, **caractérisé en ce que** l'unité de composants électriques a en outre :
un espace (1A) formé entre le panneau d'alimentation électrique et le radiateur ; et
un trou (14C) formé dans la partie de chevauchement,
dans lequel on fait passer l'air à travers l'espace et le trou, où l'espace et le trou font face au couvercle du conduit.

7. Véhicule industriel selon l'une quelconque des revendications 1 à 6, **caractérisé en ce** en que l'unité de composants électriques a en outre un boîtier (9) entourant le ventilateur, le ventilateur a une base (8A) de ventilateur, une partie du boîtier étant formée en un seul bloc avec l'élément de base et le reste du boîtier étant formé en un seul bloc avec la base du ventilateur.

8. Véhicule industriel selon l'une quelconque des revendications 1 à 7, comprenant en outre :
une unité (22) de batterie ;
un moteur d'entraînement (30) ; et
un outil de chargement (24) ;
où les onduleurs sont prévus dans les lignes électriques entre l'unité de batterie et le moteur d'entraînement ou entre l'unité de batterie et l'outil de chargement, **caractérisé en ce qu'**au moins un radiateur est disposé dans chacun des passages distincts.

9. Véhicule industriel selon l'une quelconque des revendications 1 à 8, comprenant en outre :
un contrepoids (23) prévu à l'arrière de la carrosserie du véhicule ;
une unité de batterie prévue au milieu de la carrosserie du véhicule ; et
un couvercle (29) couvrant l'unité de composants électriques,
**caractérisé en ce que** l'unité de composants électriques est disposée entre le contrepoids et l'unité de batterie,
dans lequel l'ouverture fait face au contrepoids,
dans lequel une paire de passages distincts s'étendent vers des côtés latéraux opposés de la carrosserie du véhicule, chaque ventilateur étant prévu à une position vers l'extérieur de l'extrémité du passage distinct.
